# EUROPEAN PATENT APPLICATION

(11) **EP 2 725 553 A1**
(43) Date of publication of application: **30.04.2014**
(21) Application number: 13190591.1
(22) Date of filing: 29.10.2013
(51) Int. Cl.: G06T 7/40, G06K 9/00, H04N 21/44

(54) **DCT based black frame detection using varying blocksize**

(30) Priority: 29.10.2012 IN MU31302012
(71) Applicant: Tektronix, Inc., Beaverton, Oregon 97077-0001 (US)
(72) Inventor: Rickesh, T, 560040 Karnataka (IN)
(74) Representative: Clarke, Jeffrey

(57) **Abstract**

A video detector that detects black frames in a video includes a grayscale converter, a parser for parsing the grayscale video into a sequence of individual frames, a sub-frame parser for parsing frames of an uneven block size into two or more sub-frames, and a DCT calculator. The detector extracts a DC component or AC component, or both, of the generated DCT and then compares them against respective threshold values. The individual frames are identified as a black frame based on a comparison between the selected component and the threshold value. Methods of detecting black frames based on DC components and AC components are also described.

## Description

### FIELD OF THE INVENTION

This disclosure is directed to video analysis, and, more particularly, to systems and methods for determining black frames in a video stream.

### BACKGROUND

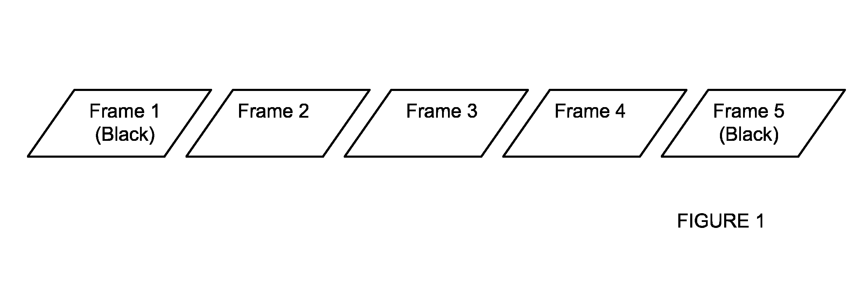

There are oftentimes black frames that occur at the end or start of a video. A video is a sequence of frames containing visual data. Black frames are used to indicate the start or stop of a video. In some embodiments, black frames are used as markers in a video stream to indicate where advertisements or other breaks in the video should occur. Thus, it is useful information to know exactly where the video begins or ends by determining which frames in a video sequence are black. Fig. 1 illustrates a video that includes five frames, labeled "Frame 1" through "Frame 5." In this example, Frame 1 and Frame 5 are black frames, while the Frames 2-4 contain video data. Frames 1 and 5 indicate the beginning and end of a video sequence. Of course, the video sequence in Fig. 1 is merely an example, and typically a video would contain many more frames of video data than the three frames, Frames 2-4, illustrated here. Also, it is not strictly necessary that both the beginning and ending of a video be marked with black frames, although this is typical.

Existing methods for black frame detection includes directly calculating a brightness mean of pixels in a frame, then calculating a brightness variance of a large number of pixels in the frame as compared to the mean brightness. If the mean is very low, then the frame is likely a black frame, because pixels of a black frame are nearly uniformly black. This method, however, requires a large amount of resources to make all the calculations necessary to determine if the particular frame is a black frame. Other methods use the same general idea, but use selected reference pixels in various locations to make the determination. Although the number of calculations is less than the first described method, the reference pixel method also takes a substantial number of calculations, which, in turn, uses substantial resources.

Embodiments of the invention address these and other limitations of the prior art.

### SUMMARY

Embodiments of the invention include a video detector for detecting black frames in a video that includes a number of individual sequential frames. The video detector includes an input for accepting the video, and, if necessary, an RGB converter to convert the video to RGB. A grayscale converter in the detector converts the video to grayscale. A parser is used to parse the grayscale video into a sequence of individual frames. A frame size determination is made, and, if the frame is not of an even block size, a sub-frame parser is used to parse those individual frames that do not have the even block size, such as 32x32. A DCT calculator generates a DCT of a frame or of a sub-frame, or maybe both. The detector includes a DC component extractor for extracting a DC component of the generated DCT, and optionally an AC component extractor for extracting a AC component of the generated DCT. A comparator evaluates the extracted DC and possibly AC components against respective threshold values. An identifier then indicates the individual frame as a black frame based on a comparison.

Similarly, method embodiments for detecting black frames in a video that includes a number of individual sequential frames include first converting the video to RGB, if necessary, then converting the video to grayscale. Next the grayscale video is parsed into a sequence of individual frames. If the frames can be parsed into an even number of regular block sizes, for example 32x32, then only one parsing is made. If some frames are different sized, then a sub-parser generates one or more sub-frames. Next the method generates a DCT of a frame or of a sub-frame and extracts a DC component and maybe AC component thereof. These extracted components are then evaluated against a component threshold value. If the evaluation is below the threshold, then the block is determined to be black. If all of the blocks within the frame are determined to be black, then the frame is marked as black. Various options also exist without breaking from the spirit of the invention.

### BRIEF DESCRIPTION OF THE DRAWINGS

Fig. 1 is a block diagram illustrating presence of black frames within a video stream.

Fig. 2 is a flow diagram illustrating example methods according to embodiments of the invention.

Fig. 3 is a flow diagram illustrating an example method of computing a DCT transform and selecting a DC component thereof according to embodiments of the invention.

Fig. 4 is a flow diagram illustrating an example method of computing a DCT transform and selecting DC and AC components thereof according to embodiments of the invention.

Fig. 5 is a functional block diagram of a black frame detector according to embodiments of the invention.

### DETAILED DESCRIPTION

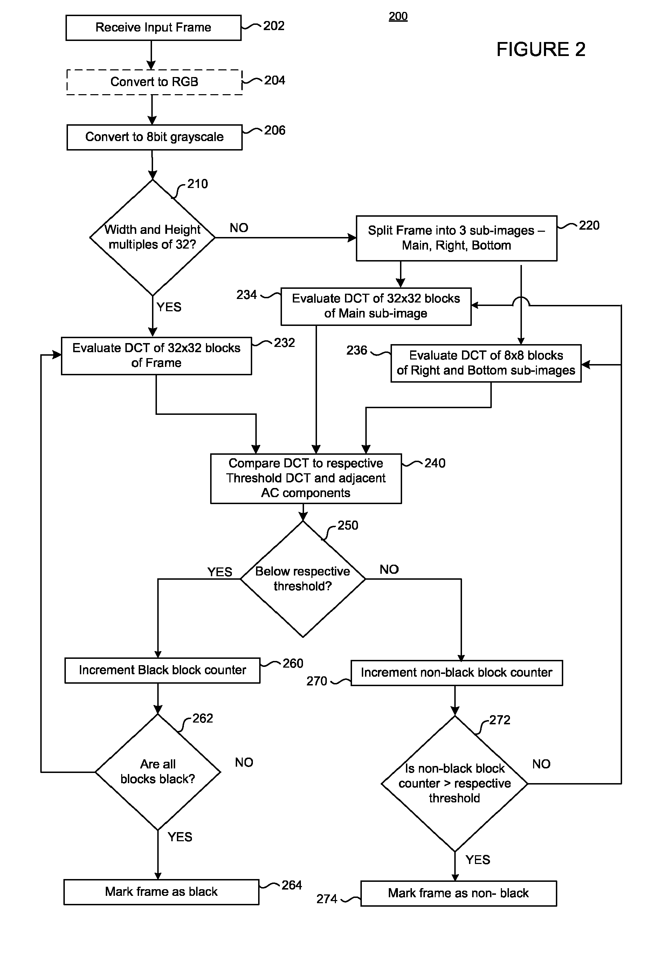

Fig. 2 is a flow diagram 200 illustrating example methods according to embodiments of the invention. In an operation 202 a video frame, such as any of the Frames 1-5 of Fig. 1 are input to a black frame detector. Frames may be in YUV color space or other color spaces or formats. In some embodiments the video is converted to RGB (Red, Green, and Blue) components, which may allow the black frame detector to better discern between single color frames, or predominately single color frames, such as green.

After converting to RGB, the video is converted to grayscale in an operation 206, such as an 8-bit grayscale image. Other bit depths may produce similar results, but 8-bit grayscale depth seems a good tradeoff between processing time and good detection results.

An operation 210 checks the size of the present frame to determine if the input frame can be evenly divided into 32x32 blocks. Other sized blocks may be used without deviating from the inventive scope of the invention. If the frame may be evenly divided into 32x32 blocks a DCT (Discrete Cosine Transform) of the block is taken in a process 232.

If instead the frame cannot be broken evenly into 32x32 blocks, then a sub-parser splits the frame into sub-images. A Main sub-frame is composed of a large or largest block that may be evenly split into 32x32 blocks. In other words, the main frame may be the maximum size that is a multiple of 32x32. Any pixels left over toward an edge of the full frame after the Main sub-frame has been removed is processed using 8x8 sized blocks. For example, the pixels toward the right side of the full frame after the main sub-frame is removed may be processed using 8x8 blocks. Similarly, any pixels left over toward a top or bottom of the full frame after the Main sub-frame has been removed is processed using 8x8 sized blocks. In the below-described example, it is the bottom portion of the full frame after the Main frame is removed that is processed using 8x8 blocks.

An operation 234 takes a DCT of the 32x32 blocks of the Main sub-frame, and an operation 236 takes a DCT of the 8x8 blocks of the Right sub-frame, and a separate DCT of the 8x8 blocks of the Bottom sub-frame. As mentioned above, the Right and Bottom sub-frames are merely examples.

In an operation 240, respective DCTs are compared against respective programmable DCT threshold values. Setting appropriate DCT threshold values allows embodiments of the invention to determine which frames contain only black blocks, as described in detail below. In some embodiments the threshold value may be empirically derived.

In a decision operation 250, the DCTs are compared or evaluated against the threshold DCTs. If the DCTs are below or equal to the threshold, then the block is determined to contain only black pixels, i.e., it is marked as a black block. In such a case, an operation 260 increments the black-block counter. An operation 262 determines whether all of the blocks of the current frame or sub-frame are black. If all of the blocks of the current frame or sub-frame are black, then the frame is marked as a black frame 264. Embodiments of the invention may then output to the user or otherwise mark or indicate the frame as black.

If the decision operation 250 determines that the compared DCTs are instead above the threshold, then the block of the frame or sub-frame is counted as a non-black block in an operation 270. A decision operation 272 compares the number of blocks marked as non-black against a respective threshold value of non-black blocks. In some embodiments the threshold value may be empirically derived. If the counted non-black blocks exceeds this threshold value, then the frame or sub-frame is marked as a non-black frame in an operation 274. If the frame or sub-frame is marked as non-black, then the remainder of the processing is skipped and the flow 200 returns to process a subsequent frame. Variations of this above main concept are described below.

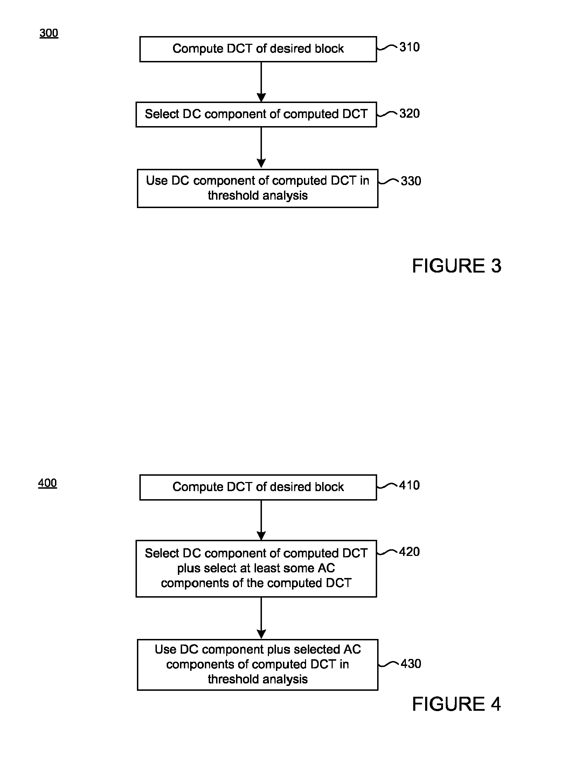

Fig. 3 illustrates how DCTs may be evaluated in embodiments of the invention. In a flow 300, a DCT is calculated of a current block using conventional methods. In some embodiments the DCT may be calculated using Intel Parallel Primitive (IPP) libraries, which, in turn, are based on an INTEL extended instruction set called SSE (Streaming SIMD Extensions). The current block may be a 32x32 block, as in the case of a full frame or Main sub-frame, or, if instead the current block is one of the 8x8 blocks of a Right sub-frame or Bottom sub-frame, then the DCT is taken of the selected 8x8 block.

An operation 320 selects only the DC component of the computed DCT for the selected block. In other words, for the process 320, only the DC components of the DCT are used, and any AC components are ignored. Then, in a process 330, the DC component of the DCT is used to compare to the threshold DCT value, for example in the operation 240 of Fig. 2

Fig. 4 illustrates another method of evaluating DCTs in embodiments of the invention. In a flow 400, an operation 410 is the same as the operation 310 of Fig. 3. However, differently than in the flow 300, a process 420 selects both DC and AC components of the computed DCT for the selected block. Then, in a process 430, the DC and AC components of the DCT are used to compare to the threshold DCT value, for example in the operations 240, 250 of Fig. 2. More specifically, several of the lower AC frequency values of the DCT, for example 3 or 4 of them, may be checked to ensure that these AC values equal zero. In such a case, and provided the DC value of the DCT was below or equal to the threshold values, the operation 250 of Fig. 2 exits in the YES direction to indicate that the frame or sub-frame being evaluated is black.

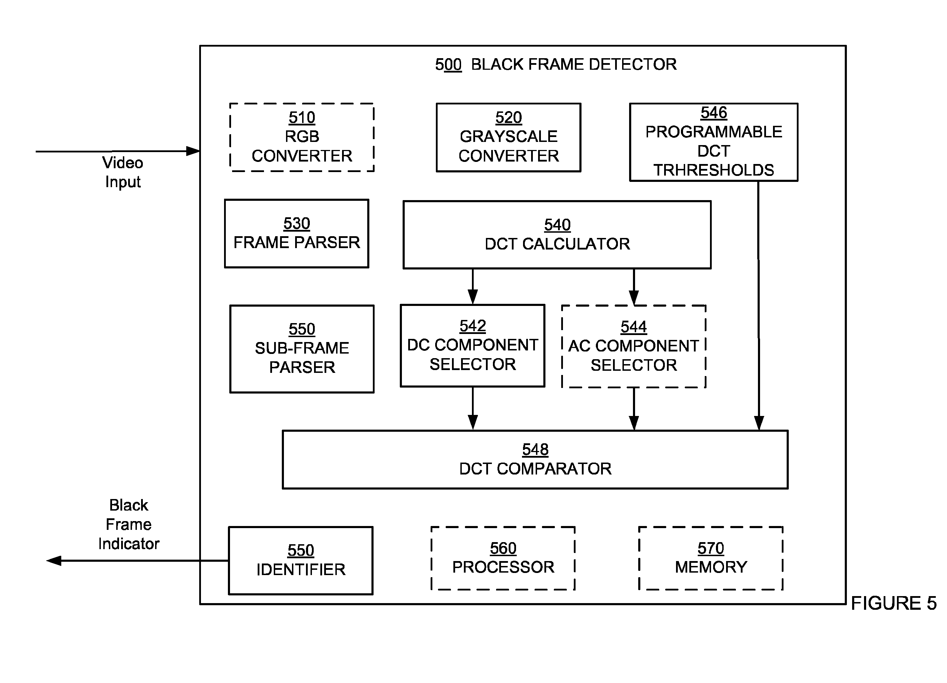

Fig. 5 is a functional block diagram of a black frame detector according to embodiments of the invention.

In Fig. 5 a video detector 500 for detecting black frames in a video that includes a number of individual sequential frames includes an input for accepting the video. If the video is not in a format that gives good results, then the video may be converted into RGB in a converter 510.A grayscale converter 520 converts the video to grayscale for operation.

A frame parser 530 may check to determine if the present frame is evenly divisible into 32x32 blocks or other operative sized blocks. If so, then the frame is used in its original size.

If instead the present frame is not evenly divisible into 32x32 blocks, then a sub-frame parser 550 splits the present frame into three sub-frames, a Main sub-frame, Right sub-frame and Bottom sub-frame. In some embodiments the Main sub-frame is the largest portion of the original frame that may be evenly divisible into 32x32 blocks. The Right sub-frame and Bottom sub-frame are processed using 8x8 blocks. Other numbers of sub-frames are possible depending on implementation details.

A DCT calculator 540 generates a DCT of a frame or of a sub-frame, and a DC component extractor 542 extracts the DC component of the generated DCT. Optionally, an AC component extractor 544 extracts some of the AC components of the DCT, for example the lowest 3 or 4 AC frequency values.

A comparator 548 is structured to evaluate the extracted DC component or both the extracted DC and AC components against a threshold or thresholds. The threshold or thresholds may be programmable and held in storage 546.

Finally, an identifier 550 is structured to indicate the individual frame as a black frame based on a comparison between the selected DC or DC and AC components and the threshold value or values.

In some embodiments any of the functions of the black frame detector 500 of Fig. 5 may be performed by a processor 560, and these functions may be stored in an associated memory 570.

As described above, in various embodiments, components of the invention may be implemented in hardware, software, or a combination of the two, and may comprise a general purpose microprocessor, a digital signal processor (DSP), an application specific integrated circuit (ASIC), a field-programmable gate array (FPGA), or the like.

It will be appreciated from the forgoing discussion that the present invention represents a significant advance in video detection. Although specific embodiments of the invention have been illustrated and described for purposes of illustration, it will be understood that various modifications may be made without departing from the scope of the invention. Accordingly, the invention should not be limited except as by the appended claims.

## Claims

1. A video detector for detecting black frames in a video that includes a number of individual sequential frames, comprising:
an input for accepting the video;
a grayscale converter for converting the video to grayscale;
a parser for parsing the grayscale video into a sequence of individual frames;
a sub-frame parser for parsing those individual frames that do not have a size of an even block size into one or more sub-frames;
a DCT calculator for generating a DCT of a frame or of a sub-frame;
a DC component extractor for extracting a DC component of the generated DCT;
a comparator structured to evaluate the extracted DC component against a DC component threshold value; and
an identifier structured to indicate the individual frame as a black frame based on a comparison between the selected DC component and the threshold value.

2. The video detector for detecting black frames according to claim 1 in which the even block size is 32x32.

3. The video detector for detecting black frames according to claim 1 in which the DCT calculator is structured to generate a DCT of a frame and of one or more sub-frames.

4. The video detector for detecting black frames according to claim 1 in which the sub-frame parser is structured to, for those individual frames that do not have a size of the even block size:
parse a main portion of the individual frame into a main sub-frame having block sizes of 32x32;
parse a right portion of the individual frame into a right frame having block sizes of 8x8; and
parse a bottom portion of the individual frame into a right frame having block sizes of 8x8.

5. The video detector for detecting black frames according to claim 1, further comprising:
an AC component extractor for extracting one or more AC components of the generated DCT, and in which
the comparator is also structured to evaluate the extracted one or more AC components against an AC component threshold value.

6. The video detector for detecting black frames according to claim 1 or 5 in which the DC component value is programmable.

7. The video detector for detecting black frames according to claim 6 in which the identifier is structured to indicate the individual frame as a black frame when all of the AC components are zero.

8. The video detector for detecting black frames according to claim 6 in which
at least one of the grayscale converter, parser, sub-frame parser, DCT calculator, DC component extractor, comparator, and identifier are functions of a programmed processor.

9. A method for detecting black frames in a video that includes a number of individual sequential frames, the method comprising:
converting the video to grayscale;
parsing the grayscale video into a sequence of individual frames;
parsing those individual frames that do not have a size of an even block size into one or more sub-frames;
generating a DCT of a frame or of a sub-frame;
extracting a DC component of the calculated DCT; and
evaluating the selected DC component against a DC component threshold value.

10. The method for detecting black frames according to claim 9, further comprising indicating the individual frame as a black frame based on a comparison between the selected DC component and the threshold value.

11. The method for detecting black frames according to claim 9 in which the even block size is 32x32.

12. The method for detecting black frames according to claim 9, in which generating a DCT of a frame or a sub frame comprises generating a DCT of a frame and one or more sub-frames.

13. The method for detecting black frames according to claim 9, in which parsing those individual frames that do not have a size of an even block size into one or more sub-frames comprises:
parsing a main portion of the individual frame into a main sub-frame having block sizes of 32x32;
parsing a right portion of the individual frame into a right frame having block sizes of 8x8; and
parsing a bottom portion of the individual frame into a right frame having block sizes of 8x8.

14. The method for detecting black frames according to claim 11, further comprising:
extracting one or more AC components of the generated DCT; and
evaluating the selected one or more AC components against an AC component threshold value.

15. The method for detecting black frames according to claim 11, further comprising:
setting the DC component value; and/or
setting the AC component value.
